# EUROPÄISCHE PATENTSCHRIFT

(11) **EP 3 365 659 B1**
(45) Veröffentlichungstag und Bekanntmachung des Hinweises auf die Patenterteilung: **02.12.2020**
(21) Anmeldenummer: 16791308.6
(22) Anmeldetag: 18.10.2016
(51) Int. Cl.: G01N 21/03, G01N 21/35, G01N 21/27

(54) **INFRAROT-MESSVORRICHTUNG**
INFRARED MEASURING DEVICE
DISPOSITIF DE MESURE INFRAROUGE

(30) Priorität: 22.10.2015 DE 102015013654
(43) Veröffentlichungstag der Anmeldung: 29.08.2018
(73) Patentinhaber: RMA Mess - und Regeltechnik GmbH & Co. KG, 77866 Rheinau (DE)
(72) Erfinder: KONZ, Werner, 79110 Freiburg (DE); BOLWIEN, Carsten, 79110 Freiburg (DE); ADOLPH, Stefan, 79110 Freiburg (DE)
(74) Vertreter: Lichti - Patentanwälte Partnerschaft mbB
(86) Internationale Anmeldenummer: PCT/EP2016/001727
(87) Internationale Veröffentlichungsnummer: WO 2017/067657

(56) Entgegenhaltungen:
- EP-A2- 1 953 532
- DE-A1- 3 115 642
- DE-A1-102009 028 254
- US-A- 5 003 175
- US-A- 5 334 536
- US-A1- 2007 034 792

## Beschreibung

Die Erfindung betrifft eine Infrarot-Messvorrichtung entsprechend Anspruch 1.

Eine entsprechende Infrarot-Messvorrichtung kann insbesondere eingesetzt werden zur Analyse von Fluiden, also Gasen und/oder Flüssigkeiten, insbesondere zur Analyse von Erdgasen oder anderen Brenngasen.

Es sind Infrarot-Messvorrichtungen zur Messung eines Fluids bekannt, bei denen ein Infrarot-Strahl aus einer Infrarot-Strahlquelle emittiert und über Spiegel durch eine Kammer gelenkt wird, in der sich das Fluid befindet. Nach Durchlaufen der Kammer wird der Infrarot-Strahl auf einen Infrarot-Detektor gelenkt, der die spektrale Verteilung des Infrarot-Strahls registriert und diese an eine Auswertevorrichtung weiterleitet.

In einem ersten Verfahrensschritt wird die Kammer mit einem Referenzfluid gefüllt, das in einer bekannten stofflichen Zusammensetzung vorliegt. Der Infrarot-Strahl durchdringt die mit dem Referenzfluid gefüllte Kammer und trifft dann auf den Infrarot-Detektor. In der aufgezeichneten spektralen Verteilung sind charakteristische Merkmale wie beispielsweise Absorptionsbanden enthalten, die den Komponenten des Referenzfluids zugeordnet werden können. Die spektrale Verteilung der Referenzmessung am Referenzfluid wird in der Auswertevorrichtung gespeichert.

In einem zweiten Verfahrensschritt wird die Kammer mit einem zu messenden Probenfluid befüllt, das in unbekannter Zusammensetzung vorliegt. Hierzu wird zunächst das vorherige Referenzfluid mittels einer Spülvorrichtung aus der Kammer entfernt, woraufhin die Kammer mit dem Probenfluid befüllt wird. Nach Durchlaufen des Infrarot-Strahls durch die mit dem Probenfluid gefüllte Kammer wird dessen spektrale Verteilung am Infrarot-Detektor aufgezeichnet und an die Auswertevorrichtung weitergeleitet. Dort wird die spektrale Verteilung des Probenfluids mit der spektralen Verteilung des Referenzfluids verglichen, um Rückschlüsse auf die Zusammensetzung des Probenfluids zu ziehen. Zur Präzisierung der Methode können auch mehrere Referenzfluide gemessen werden, wobei zwischen jeder Messung das gemessene Fluid durch die Spülvorrichtung aus der Kammer entfernt werden muss.

Eine derartige Infrarot-Messvorrichtung weist mehrere Nachteile auf: Zum einen ist der Fluidwechsel in der Kammer zeitaufwändig, so dass die Dauer für eine vollständige Messreihe mit einer Referenzmessung und einer Probenmessung sehr lang ist. Daher eignen sich diese Systeme nur bedingt zur Messung während eines laufenden Prozesses, wie beispielsweise während der Gasförderung (Online-Messung). Zum anderen verbleibt auch nach dem Fluidwechsel in manchen Fällen ein gewisser Anteil des vorherigen Fluids als Fluidrest in der Kammer, was zu einer Verfälschung der Ergebnisse der nachfolgenden Messung führt. Zwar gibt es die Möglichkeit, durch eine Spülung mit Stickstoff das vorherige Fluid aus der Kammer auszuleiten, allerdings verbleiben dann Reste des Stickstoffes als Fluidreste in der Kammer, was nach wie vor zu einer Beeinträchtigung der Ergebnisse der nachfolgenden Messung führt. Darüber hinaus ist nicht auszuschließen, dass nach dem Fluidwechsel in der Kammer veränderte Versuchsbedingungen wie beispielsweise eine geänderte Temperatur oder ein geänderter Druck herrschen, was sich nachteilig auf die Vergleichbarkeit der Messungen und deren Ergebnisse auswirkt.

Aus der DE 41 19 346 A1 ist eine UV-Messvorrichtung bekannt, bei der eine Referenzkammer für ein Referenzfluid und eine Probenkammer für ein zu analysierendes Probenfluid unabhängig voneinander ausgebildet sind. Die Referenzkammer und die Probenkammer sind parallel auf Abstand nebeneinander auf einem gemeinsamen Schlitten angeordnet, der zwischen zwei Betriebsstellungen verstellbar ist. In einer ersten Betriebsstellung durchdringt ein UV-Strahl die Referenzkammer, tritt aus diesem aus und wird einem UV-Detektor zugeführt. In einer zweiten Betriebsstellung wird der Schlitten mit den beiden Kammern verschoben, so dass der UV-Strahl die Probenkammer durchdringt und anschließend dem UV-Detektor zugeführt wird. Aus der US 2007/0034792 A2 ist eine Infrarot Messvorrichtung bekannt in welcher eine Referenz- und Probenmesskammer als Einheit zwischen zwei Betriebsstellungen verschoben werden kann, in denen der Infrarot-Strahl entweder durch die Referenz- oder Probenkammer geführt wird.

Sowohl die Probenkammer als auch die Referenzkammer sind als unabhängiges Bauteil ausgebildet und besitzen jeweils an ihrer Strahl-Eintrittsfläche und ihrer Strahl-Austrittsfläche eine transparente Abdeckung. Die transparenten Abdeckungen können das Messergebnis verfälschen, wenn sie nicht jeweils die exakt gleiche Dicke und die exakt gleichen Materialeigenschaften besitzen. Um dies zu überprüfen, sind aufwändige Tests notwendig, was sehr kostenintensiv ist. Dem Anmeldungsgegenstand liegt die Aufgabe zugrunde, eine Infrarot-Messvorrichtung der genannten Art zu schaffen, bei der Messfehler infolge der transparenten Abdeckungen der Kammer vermieden oder zumindest minimiert sind.

Die Aufgabe wird durch eine Infrarot-Messvorrichtung mit den Merkmalen des Anspruchs 1 gelöst.

Dabei ist eine Infrarot-Messvorrichtung vorgesehen, die eine Infrarot-Strahl-quelle zum Aussenden eines Infrarot-Strahls, eine Referenzkammer, in der ein Referenzfluid aufgenommen ist, eine Probenkammer, in der ein zu analysierendes Probenfluid aufgenommen ist, einen Infrarot-Detektor und eine Auswertevorrichtung aufweist, wobei der Infrarot-Strahl in einer ersten Betriebsstellung die Referenzkammer durchdringt und der aus der Referenzkammer austretende Infrarot-Strahl von dem Infrarot-Detektor empfangbar ist, wobei der Infrarot-Strahl in einer zweiten Betriebsstellung die Probenkammer durchdringt und der aus der Probenkammer austretende Infrarot-Strahl von dem Infrarot-Detektor empfangbar ist und wobei die Referenzkammer und die Probenkammer als Einheit zwischen den zumindest zwei Betriebsstellungen verstellbar sind. Eine Strahl-Eintrittsfläche der Referenzkammer und eine Strahl-Eintrittsfläche der Probenkammer sind jeweils von einer transparenten Abdeckung überdeckt und eine Strahl-Austrittsfläche der Referenzkammer und eine Strahl-Austrittsfläche der Probenkammer sind ebenfalls jeweils von einer transparenten Abdeckung überdeckt. Dabei ist vorgesehen, dass die Abdeckung der Strahl-Eintrittsfläche der Referenzkammer und die Abdeckung der Strahl-Eintrittsfläche der Probenkammer von einer gemeinsamen ersten transparenten Abdeckung gebildet ist und dass die Abdeckung der Strahl-Austrittsfläche der Referenzkammer und die Abdeckung der Strahl-Austrittsfläche der Probenkammer von einer gemeinsamen zweiten transparenten Abdeckung gebildet sind und dass die erste transparente Abdeckung auf ihrer der Probenkammer abgewandten Seite mit einer gemeinsamen ersten äußeren Antireflex-Schicht versehen ist.

Erfindungsgemäß wird weiterhin von der Grundüberlegung ausgegangen, dass durch die konstruktive Ausgestaltung einer Referenzkammer und einer davon separaten Probenkammer eine gegenseitige Beeinflussung der Referenzmessung und der Probenmessung ausgeschlossen werden kann. Für eine Messreihe mit der Referenzmessung und der Probenmessung muss der Infrarot-Strahl zeitlich nacheinander durch beide Kammern gelenkt werden. Hierfür werden lediglich die Kammern verstellt, um den übrigen Aufbau der Infrarot-Messvorrichtung, insbesondere den empfindlichen Strahlengang, nicht zu stören.

Durch die Verwendung der Referenzkammer und der davon separaten Probenkammer entfällt der Fluidwechsel, wie er im Stand der Technik notwendig ist, da dort nur eine einzige Kammer vorhanden ist. Damit wird die Dauer zwischen der Referenzmessung und der Probenmessung reduziert. Außerdem werden Verfälschungen der Messungen infolge von in der Kammer vorhandenen Fluidresten einer vorherigen Messung ausgeschlossen.

Statt der Verstellbarkeit der Referenzkammer und der Probenkammer wäre grundsätzlich eine Veränderung des Infrarot-Strahlengangs denkbar. In diesem Fall wird der Infrarot-Strahl in einer Konfiguration des Strahlengangs durch die Referenzkammer und in einer weiteren Konfiguration des Strahlengangs durch die Probenkammer gelenkt.

In einer möglichen Ausgestaltung können die Referenzkammer in einem Referenzkammergehäuse und die Probenkammer in einem Probenkammergehäuse ausgebildet sein. Die Kammergehäuse umschließen die jeweiligen Kammern mindestens teilweise, vorzugsweise vollständig.

Die Kammergehäuse können jeweils mehrteilig ausgestaltet sein, wobei jedes Kammergehäuse mindestens einen Fensterbereich, der vom Infrarot-Strahl durchdrungen werden kann, und mindestens einen Wandungsbereich aufweist. Die Fensterbereiche können aus Materialien bestehen, deren Transmissionseigenschaften auf den Wellenlängenbereich des Infrarot-Strahls abgestimmt sind. Die Materialien können Komponenten aus Saphir (Al2O3), Calciumfluorid (CaF2), Kaliumbromid (KBr), Quartz (SiO2), Silizium (Si) und/oder Zinkselenid (ZnSe) aufweisen oder aus diesen bestehen und werden im folgenden als Infrarot-Transmissionsmaterialien bezeichnet. Die Wandungsbereiche können Komponenten aus Aluminium aufweisen oder aus Aluminium bestehen. Sowohl die Fensterbereiche als auch die Wandungsbereiche eines Gehäuses sind jeweils gasdicht und vorzugsweise gasdicht miteinander verbunden. Alternativ ist es jedoch auch möglich, dass die Referenzkammer und die Probenkammer in einem gemeinsamen Gehäuse ausgebildet sind, so dass sie eine feste Relativposition zueinander einnehmen. Auch dieses Gehäuse kann Fensterbereiche und Wandungsbereiche der genannten Art aufweisen.

Erfindungsgemäß sind die Referenzkammer und die Probenkammer auf ihren jeweiligen Strahl-Eintrittsflächen von einer gemeinsamen ersten transparenten Abdeckung überdeckt, die hinsichtlich des Wellenlängenbereichs des Infrarot-Strahls eine hohe Transmission aufweist. Die transparente Abdeckung kann aus den oben genannten Infrarot-Transmissionsmaterialien oder gegebenenfalls auch aus Glas oder Kunststoff bestehen und ist vorzugsweise so angeordnet bzw. befestigt, dass die Oberfläche der Abdeckung senkrecht zum einfallenden Infrarot-Strahl ausgerichtet ist. Durch die transparente Abdeckung sind insbesondere sowohl die Strahl-Eintrittsfläche der Referenzkammer als auch jene der Probenkammer vor äußeren Einflüssen geschützt, wie beispielsweise vor Staub oder Kratzern. Aufgrund der gemeinsamen transparenten Abdeckung ist sichergestellt, dass die Abdeckung der Referenzkammer und die Abdeckung der Probenkammer aus dem gleichen Material bestehen und die gleiche Dicke aufweisen.

Im Sinne der Erfindung bezeichnen die Strahl-Eintrittsfläche der Referenzkammer bzw. die Strahl-Eintrittsfläche der Probenkammer jene Bereiche, die der Infrarot-Strahl beim Eintritt in die jeweilige Kammer durchdringt. Entsprechend bezeichnen die Strahl-Austrittsflächen der Kammern jene Bereiche, die der Infrarot-Strahl beim Austritt aus der jeweiligen Kammer durchdringt.

Die erfindungsgemäße Infrarot-Messvorrichtung ermöglicht die Durchführung einer Referenzmessung und einer Probenmessung unter gleichen Bedingungen, da aufgrund der gleichartigen Abdeckungen und der wesentlich reduzierten Dauer zwischen der Referenzmessung der Probenmessung keine zeitlichen Schwankungen der Umgebungsbedingungen die Vergleichbarkeit der Messungen stören.

In einer möglichen Ausgestaltung der Erfindung kann ein Gehäuse vorgesehen sein, in dem sowohl die Referenzkammer als auch die Probenkammer angeordnet oder ausgebildet sind. Das Gehäuse kann als einfache Platte, als Rahmen oder als vollständig die Referenzkammer und die Probenkammer umschließender Körper ausgestaltet sein. Im Falle des umschließenden Körpers sind Öffnungen für den Eintritt und den Austritt des Infrarot-Strahls vorhanden. Durch das Gehäuse können die Referenzkammer und die Probenkammer konstruktiv einfach ausgebildet und sicher in der vorgegebenen Position gehalten und verstellt werden, so dass Verkippungen der Strahl-Eintrittsbereiche und der Strahl-Austrittsbereiche in Bezug zum Infrarot-Strahl minimiert werden.

Erfindungsgemäß ist die erste transparente Abdeckung auf ihrer der Referenzkammer und der Probenkammer abgewandten Seite mit einer ersten äußeren Antireflex-Schicht versehen, bei der es sich beispielsweise um eine oder mehrere lambda/4-Schichten aus Infrarot-transparenten Materialien mit unterschiedlichen Brechungsindices handeln kann, die aufgedampft sein können. In diesem Sinne kann eine Antireflex-Schicht auch ein Mehrschichtsystem bezeichnen. Vorzugsweise ist die Antireflex-Schicht auf den Wellenlängenbereich des Infrarot-Strahls abgestimmt, so dass Intensitätsverluste durch Reflexionen des Infrarot-Strahls beim Übergang von Luft zur ersten transparenten Abdeckung bzw. zu den Strahl-Eintrittsflächen der Referenzkammer und der Probenkammer minimiert werden. Auf diese Weise wird die Intensität des Infrarot-Strahls innerhalb der Referenzkammer und der Probenkammer erhöht, was sich vorteilhaft auf das Signal am Infrarot-Detektor auswirkt. Vorzugsweise überdeckt die erste äußere Antireflex-Schicht die Strahl-Eintrittsfläche sowohl der Referenzkammer als auch der Probenkammer. Auf diese Weise ist nur eine einzige gemeinsame Antireflex-Schicht für beide Kammern vorgesehen und es ist vermieden, dass herstellungsbedingte Schwankungen der Schichtdicken und/oder der Materialzusammensetzungen zu unterschiedlichen optischen Bedingungen führen. Durch eine gemeinsame erste äußere Antireflex-Schicht für die Strahl-Eintrittsfläche der Referenzkammer und der Probenkammer herrschen gleiche optische Bedingungen für den einfallenden Infrarot-Strahl.

In einer weiteren Ausgestaltung kann die erste transparente Abdeckung beidseitig mit jeweils einer ersten Antireflex-Schicht versehen sein, d.h. auch auf der der Referenzkammer und der Probenkammer zugewandten Seite ist die transparente Abdeckung mit einer gemeinsamen ersten inneren Antireflex-Schicht versehen, die den genannten Aufbau aufweisen kann. Dadurch werden Strahlverluste auch beim Übergang des Infrarot-Strahls in das Medium der Kammern reduziert.

Die Referenzkammer und die Probenkammer sind erfindungsgemäß auf ihrer jeweiligen Strahl-Austrittsfläche von einer gemeinsamen zweiten transparenten Abdeckung überdeckt. Das Material und/oder die Dimensionierung der zweiten transparenten Abdeckung können insbesondere gleich der ersten transparenten Abdeckung sein. Durch die zweite transparente Abdeckung sind die Strahl-Austrittsflächen der Referenzkammer und der Probenkammer jeweils vor äußeren Einflüssen geschützt.

Vorzugsweise ist die zweite transparente Abdeckung auf ihrer der Referenzkammer und der Probenkammer abgewandten Seite mit einer zweiten äußeren Antireflex-Schicht versehen. Die Dicke und die Materialzusammensetzung der zweiten äußeren Antireflex-Schicht können gleich der ersten äußeren und/oder inneren Antireflex-Schicht sein. Die zweite äußere Antireflex-Schicht kann als gemeinsame Antireflex-Schicht für die Strahl-Austrittsfläche der Referenzkammer sowie für die Strahl-Austrittsfläche der Probenkammer ausgebildet sein und gewährleistet dadurch gleiche optische Bedingungen beim Austritt des Infrarot-Strahls aus der Referenzkammer wie auch beim Austritt aus der Probenkammer. Durch die zweite äußere Antireflex-Schicht werden Verluste durch Reflexionen beim Austreten des Infrarot-Strahls aus der Referenzkammer bzw. der Probenkammer minimiert. Dies führt zu einer Erhöhung der Strahlintensität des Infrarot-Strahls nach dem Austritt aus der Referenzkammer bzw. der Probenkammer und wirkt sich vorteilhaft auf das Signal am Infrarot-Detektor aus.

In einer weiteren Ausgestaltung kann die zweite transparente Abdeckung beidseitig mit jeweils einer zweiten Antireflex-Schicht versehen sein, d.h. auch auf der der Referenzkammer und der Probenkammer zugewandten Seite ist die transparente Abdeckung mit einer gemeinsamen zweiten inneren Antireflex-Schicht versehen, die den genannten Aufbau aufweisen kann. Dadurch werden Strahlverluste beim Übergang des Infrarot-Strahls von der jeweiligen Kammer in das Medium außerhalb der Kammern reduziert.

Die Referenzkammer und die Probenkammer können gegebenenfalls mit dem Gehäuse zwischen den Betriebsstellungen in reiner Translation verstellbar sein. Auf diese Weise ist gewährleistet, dass die Strahl-Eintrittsfläche und die Strahl-Austrittsfläche der Referenzkammer und der Probenkammer in Bezug zu dem Infrarot-Strahl stets gleich ausgerichtet sind. Insbesondere Verkippungen werden damit vermieden, die sonst zu einer Beeinträchtigung des Strahlengangs führen. Eine Bewegung des Gehäuses in Translation stellt eine besonders einfache und kostengünstige Möglichkeit der Verstellung dar.

In einer konstruktiven Weiterbildung sind die Referenzkammer und die Probenkammer gegebenenfalls zusammen mit dem Gehäuse zwischen den beiden Betriebsstellungen längs einer Linearführung verstellbar, wobei vorzugsweise die Linearführung zumindest eine Führungsschiene und einen längs der Führungsschiene verfahrbaren Schlitten aufweist. Als Antriebsvorrichtungen eignen sich beispielsweise Piezo-Motoren, Linearmotoren oder Servomotoren. Die Linearführung kann eine einzelne Schiene oder mehrere vorzugsweise parallel verlaufende Schienen aufweisen. Mit der Linearführung ist eine konstruktiv einfache Möglichkeit gegeben, die Verstellbarkeit der Referenzkammer und der Probenkammer gegebenenfalls zusammen mit dem Gehäuse zu realisieren.

Die Referenzkammer und die Probenkammer können gegebenenfalls zusammen mit dem Gehäuse zwischen den beiden Betriebsstellungen durch mindestens einen Verstellarm verstellbar sein. Vorzugsweise sind zumindest zwei parallel zueinander auf Abstand verlaufende Verstellarme vorgesehen, wobei in diesem Fall die Verstellarme mit ihrem einen Ende jeweils mit dem Gehäuse verbunden sind, so dass die Infrarot-Messvorrichtung und insbesondere die Ausrichtung des Infrarot-Strahlengangs gegenüber äußeren Einwirkungen wie beispielsweise Vibrationen widerstandsfähiger ist.

Der mindestens eine Verstellarm ist beispielsweise als Metallband ausgestaltet, das aufgrund seiner Elastizität eine rein translatorische Verstellbewegung des Gehäuses erlaubt. Der mindestens eine Verstellarm ist vorzugsweise mit seinem einen freien Ende ungelenkig gelagert und fest am Gehäuse eingespannt, wobei das andere freie Ende vorzugsweise mit einem Gestell verbunden ist. Auf diese Weise können die Referenzkammer und die Probenkammer gegebenenfalls zusammen mit dem Gehäuse ausschließlich durch die elastische Verformung des mindestens einen Verstellarmes verstellt werden, wobei die Verstellbewegung ausschließlich in Translation erfolgt. Auf diese Weise werden Verkippungen der Referenzkammer und der Probenkammer vermieden. Außerdem wird damit eine platzsparende Verstellbarkeit des Gehäuses realisiert.

Die Präzision der Verstellbewegung der Verstellarme kann dadurch gewährleistet sein, dass das Gehäuse entlang einer Führung beispielsweise in Form einer Führungsschiene bewegt wird, so dass die Ausrichtung des Gehäuses mit der Referenzkammer und der Probenkammer in Bezug auf den Infrarot-Strahl gewahrt bleibt.

In einem Beispiel einer Infrarot-Messvorrichtung können die Referenzkammer und die Probenkammer gegebenenfalls zusammen mit dem Gehäuse zwischen den mindestens zwei Betriebsstellungen schwenkbar sein. Dies erfolgt vorzugsweise mittels einer schwenkbaren Lagerplatte, die in vorteilhafter Ausgestaltung motorisch ansteuerbar ist. Die schwenkbare Lagerplatte ist beispielsweise als drehbarer Tisch ausgestaltet, auf dem die Referenzkammer und die Probenkammer in radialer Ausrichtung ihrer Längsachsen und mit einem Winkelversatz in Umfangsrichtung angeordnet sind. In diesem Fall weisen die Strahl-Eintrittsflächen und die Strahl-Austrittsflächen jeweils in eine radiale Richtung in Bezug zum Drehpunkt des Tisches.

Die schwenkbare Lagerplatte kann durch eine Antriebsvorrichtung bewegt werden, so dass über die Schwenkbewegung die Betriebsstellungen eingenommen werden können. Die schwenkbare Lagerplatte erfordert im Vergleich zu einer Linearführung einen geringeren Platzbedarf.

Die Probenkammer kann mit mindestens einem Temperatursensor und/oder mindestens einem Drucksensor und/oder mindestens einem Wärmeleitfähigkeits-Sensor und/oder mindestens einem Sauerstoffsensor versehen sein. Auf diese Weise können für die Messung erforderliche Parameter, wie beispielsweise Druck und/oder Temperatur, ständig erfasst und überwacht werden. Zur Weiterverarbeitung der erfassten Parameter sind die Sensoren mit der Auswertevorrichtung verbunden. In weiterer vorteilhafter Ausgestaltung sind Regeleinrichtungen vorgesehen, die mindestens einen der genannten Parameter in der Probenkammer einstellen. Zur Regelung der Temperatur in der Probenkammer kann daher beispielsweise ein Heizelement und/oder ein Kühlelement vorgesehen sein. Durch die Regeleinrichtungen lassen sich vom Benutzer gewünschte Bedingungen in der Probenkammer einstellen und zuverlässig aufrechterhalten. Damit sind Messungen an unterschiedlichen Orten zu unterschiedlichen Zeiten durch die Herstellung gleicher Bedingungen miteinander vergleichbar.

Vorzugsweise ist den Betriebsstellungen jeweils ein Anschlag zugeordnet, so dass die Betriebsstellungen der Referenzkammer und der Probenkammer gegebenenfalls zusammen mit dem Gehäuse auf konstruktiv einfache Weise reproduzierbar eingenommen werden können. Durch den Anschlag werden weitere Verstellbewegungen der Referenzkammer und der Probenkammer verhindert, wenn sich diese an die jeweilige Betriebspositionen bewegen.

Vorzugsweise ist eine erste Zuführleitung vorgesehen, über die das Referenzfluid der Referenzkammer zugeführt werden kann. Über eine erste Auslassleitung kann das Referenzfluid aus der Probenkammer wieder abgeführt werden. In gleichartiger Wiese ist der Probenkammer eine zweite Zuführleitung zur Einleitung des Probenfluids in die Probenkammer und eine zweite Auslassleitung zur Entleerung der Probenkammer zugeordnet.

In bevorzugter Ausgestaltung der Erfindung kann eine Zusatzprobenkammer vorgesehen sein, der das Probenfluid über eine Auslassleitung aus der Probenkammer zuführbar ist. Vorzugsweise ist die Zusatz-Probenkammer über die zweite Auslassleitung mit der Probenkammer verbunden, so dass es möglich ist, das in der Probenkammer befindliche Probenfluid entweder vollständig oder zumindest teilweise unter vorzugsweise einem geringeren Druck in der Zusatz-Probenkammer aufzunehmen, wo es beispielsweise analysiert werden kann. Zu diesem Zweck ist vorzugsweise vorgesehen, dass die Zusatz-Probenkammer mindestens einen Sauerstoffsensor und/oder mindestens einen Temperatursensor und/oder mindestens einen Drucksensor und/oder mindestens einen Wärmeleitfähigkeits-Sensor aufweist. Das in der Zusatz-Probenkammer befindliche Probenfluid kann über eine Abgasleitung abgeführt und beispielsweise einer Hauptleitung zugeführt werden.

Weitere Vorteile und Merkmale der Erfindung ergeben sich aus den Ansprüchen und der nachfolgenden Beschreibung, in der Ausführungsbeispiele der Erfindung unter Bezugnahme auf die Zeichnungen im Einzelnen erläutert sind. Dabei zeigen:
- Fig. 1: einen schematischen Aufbau einer Infrarot-Messvorrichtung in einer ersten Betriebsstellung,
- Fig. 2: die Infrarot-Messvorrichtung gemäß Fig. 1 in einer zweiten Betriebsstellung,
- Fig. 3: einen schematischen Schnitt durch ein Gehäuse der Infrarot-Messvorrichtung,
- Fig. 4: einen schematischen Aufbau einer weiteren Ausgestaltung der Infrarot-Messvorrichtung in einer ersten Betriebsstellung,
- Fig. 5: die Infrarot-Messvorrichtung gemäß Fig. 4 in einer zweiten Betriebsstellung,
- Fig. 6: eine weitere Ausgestaltung der Infrarot-Messvorrichtung in schematischer Darstellung und
- Fig. 7: eine Weiterbildung der Infrarot-Messvorrichtung.

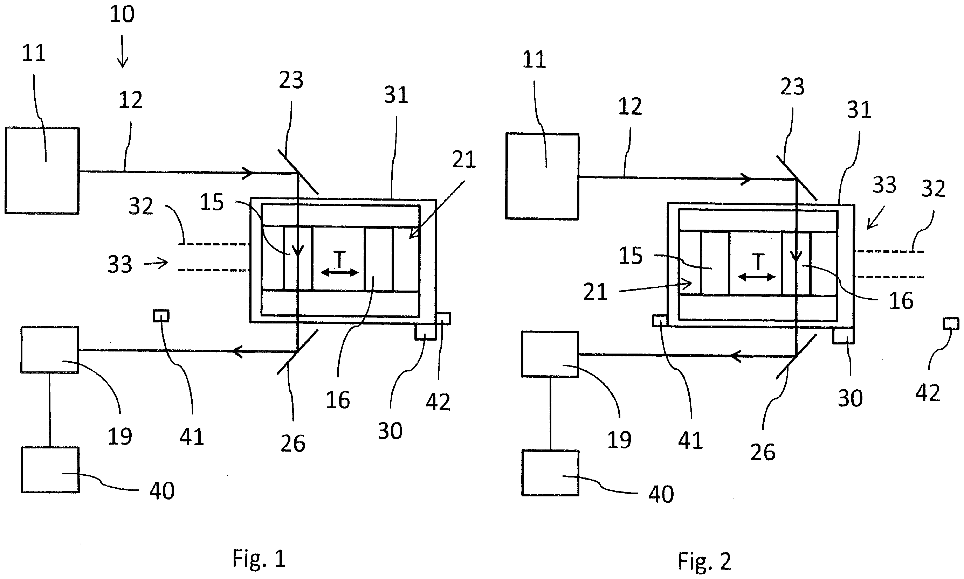

Fig. 1 zeigt schematisch den Aufbau einer Infrarot-Messvorrichtung 10. Eine Infrarot-Strahlquelle 11 emittiert einen Infrarot-Strahl 12, der über zwei Spiegel 23, 26 auf einen Infrarot-Detektor 19 gelenkt wird. Das Spektrum des Infrarot-Strahls 12 kann schmalbandig ausgestaltet sein oder einen weiten Frequenzbereich umfassen. Andere Ausgestaltungen mit mehr oder weniger Spiegeln zur Strahlführung sind denkbar. Der Infrarot-Detektor 19 ist zur Spektralanalyse des einfallenden Infrarot-Strahls 12 ausgebildet und leitet die Ergebnisse an eine Auswerteeinheit 40 weiter.

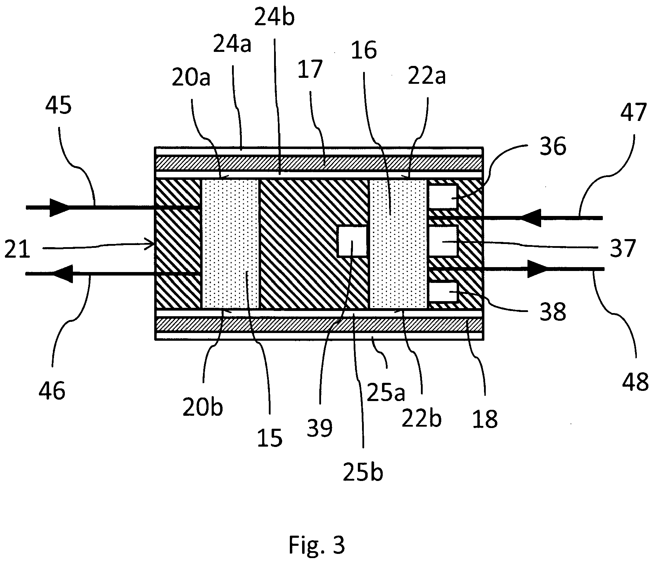

Im Bereich zwischen den beiden Spiegeln 23, 26 sind eine Referenzkammer 15, in der sich ein Referenzfluid befindet, und eine Probenkammer 16 angeordnet, in der sich ein zu analysierendes Probenfluid befindet. Die Referenzkammer 15 und die Probenkammer 16 sind innerhalb eines gemeinsamen Gehäuses 21 angeordnet, das in Fig. 3 vergrößert dargestellt ist, und verlaufen parallel zueinander.

Eine Strahl-Eintrittsfläche 20a der Referenzkammer 15 ist jene Fläche, die der Infrarot-Strahl 12 beim Eintritt in die Referenzkammer 15 durchdringt. Mit der Strahl-Austrittsfläche 20b der Referenzkammer 15 ist jene Fläche bezeichnet, die der Infrarot-Strahl 12 beim Austreten aus der Referenzkammer 15 durchdringt. Entsprechendes gilt für eine Strahl-Eintrittsfläche 22a und eine Strahl-Austrittsfläche 22b der Probenkammer 16. Die Referenzkammer 15 und die Probenkammer 16 sind so ausgerichtet, dass ihre Strahl-Eintrittsflächen 20a bzw. 22a und ihre Strahl-Austrittsflächen 20b bzw. 22b senkrecht zum einfallenden und austretenden Infrarot-Strahl 12 angeordnet sind.

Die Strahl-Eintrittsflächen 20a bzw. 22a der Referenzkammer 15 und der Probenkammer 16 befinden sich in Fig. 3 oben, während sich die beiden Strahl-Austrittsflächen 20b zw. 22b in Fig. 3 unten befinden.

Auf den Strahl-Eintrittsflächen 20a bzw. 22a beider Kammern 15, 16 ist eine gemeinsame erste transparente Abdeckung 17 des Gehäuses 21 in Form einer Platte vorgesehen, die sich im gezeigten Ausführungsbeispiel über die gesamte Breite des Gehäuses 21 erstreckt. Die erste transparente Abdeckung 17 ist beispielsweise aus Zinkselenid gefertigt und in ihren Transmissionseigenschaften auf den Wellenlängenbereich des Infrarot-Strahls 12 abgestimmt.

Auf der der Referenzkammer 15 und der Probenkammer 16 abgewandten Seite der ersten transparenten Abdeckung 17 ist eine erste äußere Antireflex-Schicht 24a angeordnet. Zusätzlich ist auf der der Referenzkammer 15 und der Probenkammer 16 zugewandten Seite der ersten transparenten Abdeckung 17 eine erste innere Antireflex-Schicht 24b vorgesehen. Beide Antireflex-Schichten 24a bzw. 24b sind auf die Wellenlänge bzw. den Wellenlängenbereich des Infrarot-Strahls 12 abgestimmt. Im Falle eines breitbandigen Infrarot-Strahls 12 können die ersten Antireflex-Schichten 24a bzw. 24b als Antireflex-Schichtsysteme bzw. mehrlagig ausgebildet sein. Durch die Antireflex-Schichten 24a und 24b werden Strahlverluste durch Reflexionen des Infrarot-Strahls 12 beim Übergang von Luft zur jeweiligen Kammer 15, 16 minimiert. Die ersten Antireflex-Schichten 24a bzw. 24b decken die erste transparente Abdeckung 17 jeweils vollständig ab.

Die Strahl-Austrittsflächen 20b bzw. 22b der Referenzkammer 15 und der Probenkammer 16 weisen eine gemeinsame zweite transparente Abdeckung 18 des Gehäuses 21 auf. Die zweite transparente Abdeckung 18 ist vorzugsweise ebenfalls wie die erste transparente Abdeckung 17 aus Zinkselenid gefertigt, dessen Transmissionseigenschaften auf den Wellenlängenbereich des Infrarot-Strahls 12 abgestimmt ist. Auf der der Referenzkammer 15 und der Probenkammer 16 abgewandten Seite der zweiten transparenten Abdeckung 18 ist eine zweite äußere Antireflex-Schicht 25a angeordnet. Zusätzlich ist auf der der Referenzkammer 15 und der Probenkammer 16 zugewandten Seite der zweiten transparenten Abdeckung 18 ist eine zweite innere Antireflex-Schicht 25b angeordnet. Die zweiten Antireflex-Schichten 25a und 25b sind auf die Wellenlänge bzw. den Wellenlängenbereich des Infrarot-Strahls 12 abgestimmt. Vorzugsweise weisen die zweiten Antireflex-Schichten 25a und 25b die gleichen Dicken und Materialzusammensetzungen wie die ersten Antireflex-Schichten 24a und 24b auf.

Außer den zwei transparenten Abdeckungen 17, 18 sind die übrigen Wandungen des Gehäuses 21 aus Metall oder Aluminium gefertigt. Sämtliche Wandungen des Gehäuses sind sowohl miteinander als auch mit den Abdeckungen 17, 18 gasdicht verbunden.

Gemäß Fig. 3 ist die Probenkammer 16 mit einem Temperatursensor 36, einem Drucksensor 37, einem Wärmeleitfähigkeits-Sensor 38 und einem Sauerstoffsensor 39 versehen. Die Sensoren registrieren die zugeordneten Parameter in der Probenkammer 16 und leiten die entsprechenden Werte zur Auswerteeinheit 40 weiter. Über nicht dargestellte Steuer- oder Regeleinheiten lassen sich die Parameter der Bedingungen in der Probenkammer 16 ändern und hinsichtlich der Benutzerwünsche anpassen.

Die Referenzkammer 15 kann mit einem Referenzfluid über eine 1. Zuführleitung 45 gefüllt und über eine 1. Auslassleitung 46 entleert werden. Entsprechend kann das Probenfluid über eine 2. Zuführleitung 47 in die Probenkammer 16 eingefüllt und über eine 2. Auslassleitung 48 aus dieser abgeführt werden. Die genannten Leitungen sind in Figur 3 schematisch dargestellt.

Das Gehäuse 21 mit der Referenzkammer 15 und der Probenkammer 16 ist auf einem Schlitten 31 angeordnet, der längs einer Linearführung 33 verstellbar ist wie es durch den Doppelpfeil T in Fig. 1 angeordnet ist. Die Linearführung 33 weist zwei parallel zueinander angeordnete und sich jeweils linear erstreckende Führungsschienen 32 auf. Der Schlitten 31 ist mittels einer Antriebsvorrichtung 30 entlang der Führungsschienen 32 bewegbar. Auf diese Weise sind die Referenzkammer 15 und die Probenkammer 16 zusammen mit dem Gehäuse 21 als Einheit in Translation verstellbar.

Die Infrarot-Messvorrichtung 10 gemäß den Fig. 1 und 2 kann zwei Betriebsstellungen einnehmen: In einer ersten Betriebsstellung ist der Schlitten 31 der Linearführung 33 derart verstellt, dass der Infrarot-Strahl 12 in seinem Abschnitt zwischen den beiden Spiegeln 23, 26 die Referenzkammer 15 mit dem Referenzfluid durchläuft (Fig. 1). In dieser Position liegt der Schlitten 31 an einem Anschlag 42 an, so dass der Schlitten 31 diese definierte Position reproduzierbar einnimmt.

In einer in Fig. 2 gezeigten zweiten Betriebsstellung ist der Schlitten 31 mit der Referenzkammer 15 und der Probenkammer 16 entlang der Führungsschienen 32 in seiner linearen Verstellrichtung T derart nach links verschoben, dass der Schlitten 31 an einem weiteren Anschlag 41 anliegt. Durch die Bewegung des Schlittens 31 werden über die Bewegung des Gehäuses 21 die Referenzkammer 15 und die Probenkammer 16 als Einheit verstellt, so dass der Abschnitt des Infrarot-Strahls 12 zwischen den beiden Spiegeln 23, 26 in der zweiten Betriebsstellung die Probenkammer 16 mit dem Probenfluid durchläuft.

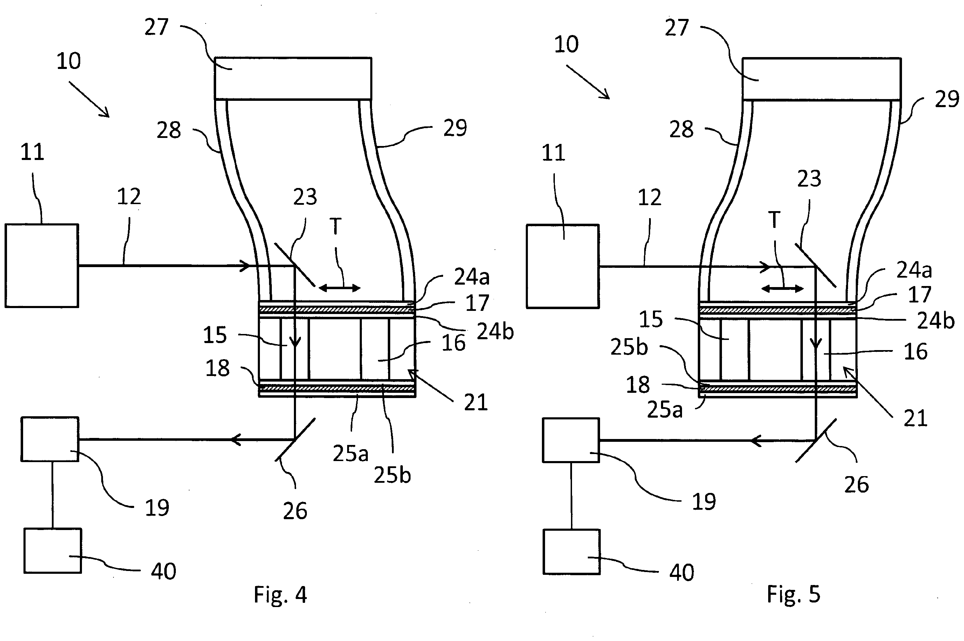

Die Fig. 4 und 5 zeigen eine weitere Ausgestaltung der Infrarot-Messvorrichtung 10, die sich von der vorgenannten Ausgestaltung im Wesentlichen durch die verstellbare Lagerung des Gehäuses 21, der Referenzkammer 15 und der Probenkammer 16 unterscheidet. Die Referenzkammer 15 und die Probenkammer 16 sind in dem bereits in Fig. 3 gezeigten Gehäuse 21 angeordnet und weisen die jeweiligen transparenten Abdeckungen 17, 18 und die ersten Antireflex-Schichten 24a und 24b und die zweiten Antireflex-Schichten 25a und 25b auf. Das Gehäuse 21 ist über zwei Verstellarme 28, 29 mit einer ortsfesten Halterung 27 verbunden und in Translation T verstellbar. Dabei befinden sich die Strahl-Eintrittsflächen und die Strahl-Austrittsflächen der Referenzkammer 15 und der Probenkammer 16 stets in senkrechter Ausrichtung zum einfallenden und austretenden Infrarot-Strahl 12, was durch eine entsprechende Führung gewährleistet ist.

Die Verstellarme 28, 29 verlaufen im Abstand nebeneinander und parallel zueinander und sind an ihren Enden sowohl mit dem Gehäuse 21 als auch mit der ortsfesten Halterung 27 fest verbunden, d.h. ungelenkig fest eingespannt. Als metallische Bänder oder Bleche besitzen die Verstellarme 28, 29 hinreichende Flexibilität senkrecht zu ihrer Band- oder Plattenebene, um eine Bewegung des Gehäuses 21 in Translation zu ermöglichen und dabei die Ausrichtung des Gehäuses beizubehalten.

Fig. 4 zeigt die Infrarot-Messvorrichtung 10 in einer ersten Betriebsstellung, in der die Referenzkammer 15 von dem Infrarot-Strahl 12 durchdrungen ist. Nach Abschluss der Referenzmessung wird das Gehäuse 21 zusammen mit der Referenzkammer 15 und der Probenkammer 16 unter elastischer Verformung der Verstellarme 28, 29 aus der in Fig. 4 gezeigten ersten Betriebsstellung in die in Fig. 5 gezeigte zweite Betriebsstellung der Infrarot-Messvorrichtung 10 verstellt. In der zweiten Betriebsstellung wird die Probenkammer 16 von dem Infrarot-Strahl 12 durchdrungen.

Im Folgenden wird eine Messreihe mit einer Referenzmessung und einer Probenmessung mit Hilfe der Infrarot-Messvorrichtung 10 beschrieben: In einer ersten Betriebsstellung der Infrarot-Messvorrichtung 10 befindet sich die Referenzkammer 15 mit dem Referenzfluid im Strahlengang des Infrarot-Strahls 12, wie es in Fig. 4 dargestellt ist. Der Infrarot-Detektor 19 registriert das Signal des Infrarot-Strahls 12 und wertet dieses hinsichtlich der spektralen Verteilung aus. Die Ergebnisse der Auswertung werden an die Auswerteeinheit 40 übertragen und dort gespeichert. Damit ist die Referenzmessung abgeschlossen.

Anschließend wird das Gehäuse 21 mit der Referenzkammer 15 und der Probenkammer 16 verschoben, wobei die Verstellarme in gleichartiger Weise elastisch verformt werden, bis die zweite Betriebsstellung erreicht ist (Fig. 5). Bei dieser Bewegung werden die Referenzkammer 15 und die Probenkammer 16 als Einheit verstellt.

In der zweiten Betriebsstellung durchdringt der Infrarot-Strahl 12 nun die Probenkammer 16 mit dem zu messenden Probenfluid. Daraufhin trifft der Infrarot-Strahl 12 auf den Infrarot-Detektor 19, der abermals die spektrale Verteilung des einfallenden Infrarot-Strahls 12 registriert. Dieses Spektrum des Probenfluids wird mit dem vorher aufgenommenen Spektrum des Referenzfluids verglichen, woraus sich Rückschlüsse auf die Zusammensetzung des Probenfluids ziehen lassen.

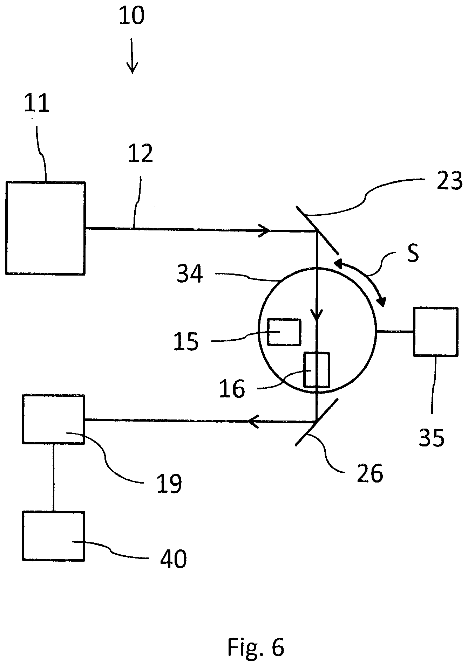

Fig. 6 zeigt ein alternatives Beispiel einer Infrarot-Messvorrichtung 10 mit einer schwenkbaren Lagerplatte 34, auf der die Referenzkammer 15 und die Probenkammer 16 in Umlaufrichtung versetzt so angeordnet sind, dass ihre Längsachse jeweils radial zur Drehachse der Lagerplatte 34 verlaufen. Die schwenkbare Lagerplatte 34 ist als drehbarer Tisch entlang der Schwenkrichtung S schwenkbar bzw. rotierbar durch eine Antriebsvorrichtung 35.

In der Betriebsstellung gemäß Fig. 6 wird die Probenkammer 16 von dem Infrarot-Strahl 12 durchdrungen. Über die Antriebsvorrichtung 35 kann die schwenkbare Lagerplatte 34 über eine Drehbewegung entlang der Schwenkrichtung S eine weitere Betriebsstellung einnehmen, in der die Referenzkammer 15 vom Infrarot-Strahl durchdrungen ist.

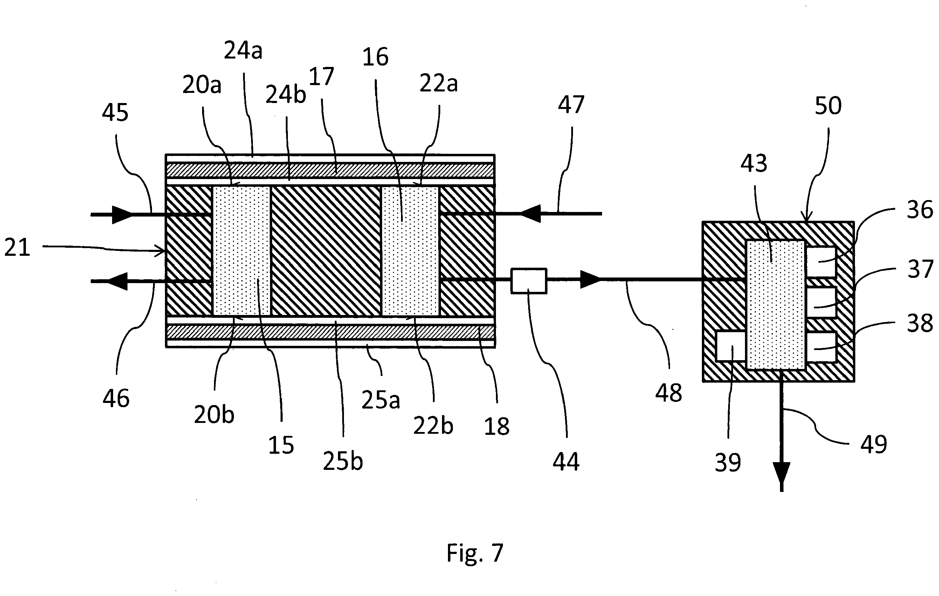

Figur 7 zeigt eine Weiterbildung der Infrarot-Messvorrichtung gemäß Figur 3, wobei gleichartige Bauteile mit gleichen Bezugszeichen versehen sind. Die Ausgestaltung gemäß Figur 7 besitzt ein Zusatz-Gehäuse 50, in dem eine Zusatz-Probenkammer 43 ausgebildet ist. Der Zusatz-Probenkammer 43 kann das Probenfluid aus der Probenkammer 16 über die zweite Auslassleitung 48 zugeführt werden, wobei in der zweite Auslassleitung 48 ein Steuerventil 44 angeordnet ist, mittels dessen der Fluiddurchlass und der Druck einstellbar ist.

In dem Zusatz-Gehäuse 50 sind an und/oder in der Zusatz-Probenkammer 43 ein Sauerstoffsensor 39, ein Temperatursensor 36, ein Drucksensor 37 und ein Wärmeleitfähigkeits-Sensor 38 angeordnet. Auf diese Weise können die Messungen mittels der genannten Sensoren zusätzlich oder alternativ zu den Messungen an der Probenkammer 16 durchgeführt werden. Da einige Sensoren bei einem relativ hohen Druck von beispielsweise 5 bar, wie er in der Probenkammer 16 herrscht, Probleme hinsichtlich ihrer Funktionsfähigkeit besitzen, ist es mit der in Figur 7 dargestellten Ausgestaltung möglich, die Messung unter einem verringerten Druck innerhalb der Zusatz-Probenkammer 43 durchzuführen.

Das in der Zusatz-Probenkammer 43 befindliche Probenfluid kann über eine nur schematisch dargestellte Abgasleitung 49 abgeführt werden, wobei auf diese Weise sowohl die Probenkammer 16 als auch die Zusatz-Probenkammer 43 vollständig entleert werden können und für einen neuen Messzyklus vorbereitet sind.

## Patentansprüche

1. Infrarot-Messvorrichtung (10) mit einer Infrarot-Strahlquelle (11) zum Aussenden eines Infrarot-Strahls (12), einer Referenzkammer (15), in der ein Referenzgas aufgenommen ist, einer Probenkammer (16), in der ein zu analysierendes Probengas aufgenommen ist, einem Infrarot-Detektor (19) und einer Auswertevorrichtung (40),
wobei der Infrarot-Strahl (12) in einer ersten Betriebsstellung die Referenzkammer (15) durchdringt und der aus der Referenzkammer (15) austretende Infrarot-Strahl (12) von dem Infrarot-Detektor (19) empfangbar ist,
wobei der Infrarot-Strahl (12) in einer zweiten Betriebsstellung die Probenkammer (16) durchdringt und der aus der Probenkammer (16) austretende Infrarot-Strahl (12) von dem Infrarot-Detektor (19) empfangbar ist,
wobei die Referenzkammer (15) und die Probenkammer (16) als Einheit zwischen den zumindest zwei Betriebsstellungen verstellbar sind,
wobei eine Strahl-Eintrittsfläche (20a) der Referenzkammer (15) und eine Strahl-Eintrittsfläche (22a) der Probenkammer (16) jeweils von einer transparenten Abdeckung überdeckt sind und
wobei eine Strahl-Austrittsfläche (20b) der Referenzkammer (15) und eine Strahl-Austrittsfläche (22b) der Probenkammer (16) jeweils von einer transparenten Abdeckung überdeckt sind,
wobei die Abdeckung der Strahl-Eintrittsfläche (20a) der Referenzkammer (15) und die Abdeckung der Strahl-Eintrittsfläche (22a) der Probenkammer (16) von einer gemeinsamen ersten transparenten Abdeckung (17) gebildet sind
und wobei die Abdeckung der Strahl-Austrittsfläche (20b) der Referenzkammer (15) und die Abdeckung der Strahl-Austrittsfläche (22b) der Probenkammer (16) von einer gemeinsamen zweiten transparenten Abdeckung (18) gebildet sind, **dadurch gekennzeichnet, dass** die erste transparente Abdeckung (17) auf ihrer der Referenzkammer (15) und der Probenkammer (16) abgewandten Seite mit einer gemeinsamen ersten äußeren Antireflex-Schicht (24a) versehen ist.

2. Infrarot-Messvorrichtung nach Anspruch 1, **dadurch gekennzeichnet, dass** die erste transparente Abdeckung (17) auf ihrer der Referenzkammer (15) und der Probenkammer (16) zugewandten Seite mit einer ersten inneren Antireflex-Schicht (24b) versehen ist.

3. Infrarot-Messvorrichtung nach einem der Ansprüche 1 oder 2, **dadurch gekennzeichnet, dass** die zweite transparente Abdeckung (18) auf ihrer der Referenzkammer (15) und der Probenkammer (16) abgewandten Seite mit einer zweiten äußeren Antireflex-Schicht (25a) versehen ist.

4. Infrarot-Messvorrichtung nach einem der Ansprüche 1 bis 3, **dadurch gekennzeichnet, dass** die zweite transparente Abdeckung (18) auf ihrer der Referenzkammer (15) und der Probenkammer (16) zugewandten Seite mit einer zweiten inneren Antireflex-Schicht (25b) versehen ist.

5. Infrarot-Messvorrichtung nach einem der Ansprüche 1 bis 4, **dadurch gekennzeichnet, dass** ein Gehäuse (21) vorgesehen ist, in dem die Referenzkammer (15) und die Probenkammer (16) angeordnet oder ausgebildet sind.

6. Infrarot-Messvorrichtung nach einem der vorangehenden Ansprüche, **dadurch gekennzeichnet, dass** die Referenzkammer (15) und die Probenkammer (16) zwischen den Betriebsstellungen in reiner Translation verstellbar sind.

7. Infrarot-Messvorrichtung nach einem der vorangehenden Ansprüche, **dadurch gekennzeichnet, dass** die Referenzkammer (15) und die Probenkammer (16) zwischen den beiden Betriebsstellungen längs einer Linearführung (33) verstellbar sind.

8. Infrarot-Messvorrichtung nach Anspruch 7, **dadurch gekennzeichnet, dass** die Linearführung (33) zumindest eine Führungsschiene (32) und einen längs der Führungsschiene (32) verfahrbaren Schlitten (31) aufweist.

9. Infrarot-Messvorrichtung nach einem der vorangehenden Ansprüche, **dadurch gekennzeichnet, dass** die Referenzkammer (15) und die Probenkammer (16) zwischen den beiden Betriebsstellungen durch mindestens einen Verstellarm (28, 29) verstellbar sind.

10. Infrarot-Messvorrichtung nach Anspruch 9, **dadurch gekennzeichnet, dass** mehrere Verstellarme (28, 29) parallel verlaufen und an ihrem einen Ende jeweils mit dem Gehäuse (21) verbunden sind.

11. Infrarot-Messvorrichtung nach einem der Ansprüche 1 bis 10, **dadurch gekennzeichnet, dass** die Referenzkammer (15) und die Probenkammer (16) zwischen den mindestens zwei Betriebsstellungen schwenkbar sind.

12. Infrarot-Messvorrichtung nach einem der vorangehenden Ansprüche, **dadurch gekennzeichnet, dass** die Probenkammer (16) mit mindestens einem Temperatursensor (36) und/oder mindestens einem Drucksensor (37) und/oder mindestens einem Wärmeleitfähigkeits-Sensor (38) und/oder mindestens einem Sauerstoffsensor (39) versehen ist.

13. Infrarot-Messvorrichtung nach einem der vorangehenden Ansprüche, **dadurch gekennzeichnet, dass** den Betriebsstellungen jeweils ein Anschlag (41, 42) zugeordnet ist.

14. Infrarot-Messvorrichtung nach einem der vorangehenden Ansprüche, **dadurch gekennzeichnet, dass** eine Zusatz-Probenkammer (43) vorgesehen ist, der das Probengas über eine Auslassleitung (48) aus der Probenkammer (16) zuführbar ist.

15. Infrarot-Messvorrichtung nach Anspruch 14, **dadurch gekennzeichnet, dass** die Zusatz-Probenkammer (43) mit mindestens einem Sauerstoffsensor (39) und/oder mindestens einem Temperatursensor (36) und/oder mindestens einem Drucksensor (37) und/oder mindestens einem Wärmeleitfähigkeits-Sensor (38) und/oder mindestens einem Sauerstoffsensor (39) versehen ist.

## Claims

1. Infrared measuring device (10) with an infrared beam source (11) for emitting an infrared beam (12), a reference chamber (15), in which a reference gas is held, a sample chamber (16), in which a sample gas to be analyzed is held, an infrared detector (19) and an evaluation device (40),
wherein, in a first operating position, the infrared beam (12) penetrates the reference chamber (15) and the infrared beam (12) emerging from the reference chamber (15) can be received by the infrared detector (19),
wherein, in a second operating position, the infrared beam (12) penetrates the sample chamber (16) and the infrared beam (12) emerging from the sample chamber (16) can be received by the infrared detector (19),
wherein the reference chamber (15) and the sample chamber (16) are adjustable as a unit between the at least two operating positions,
wherein a beam entry area (20a) of the reference chamber (15) and a beam entry area (22a) of the sample chamber (16) are respectively covered by a transparent covering and
wherein a beam exit area (20b) of the reference chamber (15) and a beam exit area (22b) of the sample chamber (16) are respectively covered by a transparent covering,
wherein the covering of the beam entry area (20a) of the reference chamber (15) and the covering of the beam entry area (22a) of the sample chamber (16) are formed by a common first transparent covering (17)
and
wherein the covering of the beam exit area (20b) of the reference chamber (15) and the covering of the beam exit area (22b) of the sample chamber (16) are formed by a common second transparent covering (18),
**characterized**
**in that** the first transparent covering (17) is provided on its side facing away from the reference chamber (15) and the sample chamber (16) with a common first outer antireflective layer (24a).

2. Infrared measuring device according to Claim 1, **characterized in that** the first transparent covering (17) is provided on its side facing the reference chamber (15) and the sample chamber (16) with a first inner antireflective layer (24b).

3. Infrared measuring device according to either of Claims 1 and 2, **characterized in that** the second transparent covering (18) is provided on its side facing away from the reference chamber (15) and the sample chamber (16) with a second outer antireflective layer (25a).

4. Infrared measuring device according to one of Claims 1 to 3, **characterized in that** the second transparent covering (18) is provided on its side facing the reference chamber (15) and the sample chamber (16) with a second inner antireflective layer (25b).

5. Infrared measuring device according to one of Claims 1 to 4, **characterized in that** a housing (21) in which the reference chamber (15) and the sample chamber (16) are arranged or formed is provided.

6. Infrared measuring device according to one of the preceding claims, **characterized in that** the reference chamber (15) and the sample chamber (16) are adjustable between the operating positions in a purely translational manner.

7. Infrared measuring device according to one of the preceding claims, **characterized in that** the reference chamber (15) and the sample chamber (16) are adjustable between the two operating positions along a linear guide (33).

8. Infrared measuring device according to Claim 7, **characterized in that** the linear guide (33) has at least one guide rail (32) and a carriage (31) that can be moved along the guide rail (32).

9. Infrared measuring device according to one of the preceding claims, **characterized in that** the reference chamber (15) and the sample chamber (16) are adjustable between the two operating positions by at least one adjusting arm (28, 29).

10. Infrared measuring device according to Claim 9, **characterized in that** a number of adjusting arms (28, 29) run parallel and are respectively connected at their one end to the housing (21).

11. Infrared measuring device according to one of Claims 1 to 10, **characterized in that** the reference chamber (15) and the sample chamber (16) are pivotable between the at least two operating positions.

12. Infrared measuring device according to one of the preceding claims, **characterized in that** the sample chamber (16) is provided with at least one temperature sensor (36) and/or at least one pressure sensor (37) and/or at least one thermal conductivity sensor (38) and/or at least one oxygen sensor (39).

13. Infrared measuring device according to one of the preceding claims, **characterized in that** the operating positions are respectively assigned a stop (41, 42).

14. Infrared measuring device according to one of the preceding claims, **characterized in that** an additional sample chamber (43) is provided, to which the sample gas can be fed from the sample chamber (16) by way of an outlet line (48).

15. Infrared measuring device according to Claim 14, **characterized in that** the additional sample chamber (43) is provided with at least one oxygen sensor (39) and/or at least one temperature sensor (36) and/or at least one pressure sensor (37) and/or at least one thermal conductivity sensor (38) and/or at least one oxygen sensor (39).

## Revendications

1. Dispositif de mesure infrarouge (10) avec une source de rayon infrarouge (11) permettant d'émettre un rayon infrarouge (12), avec une chambre de référence (15) dans laquelle se trouve un gaz de référence, avec une chambre d'essai (16) dans laquelle se trouve un gaz d'essai, avec un détecteur infrarouge (19) et avec un dispositif d'analyse (40) ;
le rayon infrarouge (12) traversant la chambre de référence (15) dans une première position de fonctionnement et le rayon infrarouge (12) sortant de la chambre de référence (15) pouvant être reçu par le détecteur infrarouge (19) ;
le rayon infrarouge (12) traversant la chambre d'essai (16) dans une deuxième position de fonctionnement et le rayon infrarouge (12) sortant de la chambre d'essai (16) pouvant être reçu par le détecteur infrarouge (19) ;
la chambre de référence (15) et la chambre d'essai (16) pouvant être déplacées comme des unités individuelles entre les au moins deux positions de fonctionnement ;
une surface d'incidence de rayon (20a) de la chambre de référence (15) et une surface d'incidence de rayon (22a) de la chambre d'essai (16) étant respectivement recouvertes par un cache transparent et une surface de sortie de rayon (20b) de la chambre de référence (15) et une surface de sortie de rayon (22b) de la chambre d'essai (16) étant respectivement recouvertes par un cache transparent ;
le couvercle de la surface d'incidence de rayon (20a) de la chambre de référence (15) et le couvercle de la surface d'incidence de rayon (22a) de la chambre d'essai (16) étant formés par un premier cache transparent (17) commun ; et
le cache de la surface de sortie de rayon (20b) de la chambre de référence (15) et le cache de la surface de sortie de rayon (22b) de la chambre d'essai (16) étant formés par un deuxième cache transparent (18) commun ;
**caractérisé en ce que** :
le premier cache transparent (17) est pourvu, sur son côté opposé à la chambre de référence (15) et à la chambre d'essai (16), d'une première couche anti-réfléchissante extérieure (24a) commune.

2. Dispositif de mesure infrarouge selon la revendication 1, **caractérisé en ce que** le premier cache transparent (17) est pourvu, sur son côté orienté vers la chambre de référence (15) et vers la chambre d'essai (16), d'une première couche anti-réfléchissante intérieure (24b).

3. Dispositif de mesure infrarouge selon l'une quelconque des revendications 1 ou 2, **caractérisé en ce que** le deuxième cache transparent (18) est pourvu, sur son côté opposé à la chambre de référence (15) et à la chambre d'essai (16), d'une deuxième couche anti-réfléchissante extérieure (25a).

4. Dispositif de mesure infrarouge selon l'une quelconque des revendications 1 à 3, **caractérisé en ce que** le deuxième cache transparent (18) est pourvu, sur son côté orienté vers la chambre de référence (15) et vers la chambre d'essai (16), d'une deuxième couche anti-réfléchissante intérieure (25b).

5. Dispositif de mesure infrarouge selon l'une quelconque des revendications 1 à 4, **caractérisé en ce qu'**un carter (21) est prévu dans lequel la chambre de référence (15) et la chambre d'essai (16) sont disposées ou réalisées.

6. Dispositif de mesure infrarouge selon l'une quelconque des revendications précédentes, **caractérisé en ce que** la chambre de référence (15) et la chambre d'essai (16) peuvent être déplacées en translation pure entre les positions de fonctionnement.

7. Dispositif de mesure infrarouge selon l'une quelconque des revendications précédentes, **caractérisé en ce que** la chambre de référence (15) et la chambre d'essai (16) peuvent être déplacées le long d'un guide linéaire (33) entre les deux positions de fonctionnement.

8. Dispositif de mesure infrarouge selon la revendication 7, **caractérisé en ce que** le guide linéaire (33) comporte au moins un rail de guidage (32) et un coulisseau (31) pouvant être déplacé le long du rail de guidage (32).

9. Dispositif de mesure infrarouge selon l'une quelconque des revendications précédentes, **caractérisé en ce que** la chambre de référence (15) et la chambre d'essai (16) peuvent être déplacées par au moins un bras de déplacement (28, 29) entre les deux positions de fonctionnement.

10. Dispositif de mesure infrarouge selon la revendication 9, **caractérisé en ce que** plusieurs bras de déplacement (28, 29) s'étendent parallèlement et sont respectivement reliés au carter (21) au niveau de leur extrémité.

11. Dispositif de mesure infrarouge selon l'une quelconque des revendications 1 à 10, **caractérisé en ce que** la chambre de référence (15) et la chambre d'essai (16) peuvent pivoter entre les au moins deux positions de fonctionnement.

12. Dispositif de mesure infrarouge selon l'une quelconque des revendications précédentes, **caractérisé en ce que** la chambre d'essai (16) est pourvue d'au moins un capteur de température (36) et/ou d'au moins un capteur de pression (37) et/ou d'au moins un capteur de conductivité thermique (38) et/ou d'au moins un capteur d'oxygène (39).

13. Dispositif de mesure infrarouge selon l'une quelconque des revendications précédentes, **caractérisé en ce qu'**une butée (41, 42) est respectivement associée aux positions de fonctionnement.

14. Dispositif de mesure infrarouge selon l'une quelconque des revendications précédentes, **caractérisé en ce qu'**une chambre d'essai supplémentaire (43) est prévue dans laquelle le gaz d'essai peut être amené via une conduite de sortie (48) provenant de la chambre d'essai (16).

15. Dispositif de mesure infrarouge selon la revendication 14, **caractérisé en ce que** la chambre d'essai supplémentaire (43) est pourvue d'au moins un capteur d'oxygène (39) et/ou d'au moins un capteur de température (36) et/ou d'au moins un capteur de pression (37) et/ou d'au moins un capteur de conductivité thermique (38) et/ou d'au moins un capteur d'oxygène (39).
